# EUROPEAN PATENT SPECIFICATION

(11) **EP 2 709 864 B1**
(45) Date of publication and mention of the grant of the patent: **03.09.2014**
(21) Application number: 12725879.6
(22) Date of filing: 14.05.2012
(51) Int. Cl.: B60H 1/00, F25B 30/02

(54) **COOLING SYSTEM**
KÜHLSYSTEM
SYSTÈME DE REFROIDISSEMENT

(30) Priority: 20.05.2011 JP 2011113372
(43) Date of publication of application: 26.03.2014
(73) Proprietor: TOYOTA JIDOSHA KABUSHIKI KAISHA, Toyota-shi, Aichi-ken, 471-8571 (JP)
(72) Inventor: OHNO, Yuichi, Nishio, Aichi 445-0012 (JP); UCHIDA, Kazuhide, Nishio, Aichi 445-0012 (JP); JOJIMA, Yuki, Toyota-shi, Aichi-ken, 471-8571 (JP); KAWAKAMI, Yoshiaki, Toyota-shi, Aichi-ken, 471-8571 (JP); TAKAHASHI, Eizo, Toyota-shi, Aichi-ken, 471-8571 (JP); SATO, Kousuke, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/IB2012/000937
(87) International publication number: WO 2012/160425

(56) References cited:
- WO-A1-2005/071328
- DE-A1- 10 158 104
- US-A1- 2005 178 523

## Description

### BACKGROUND OF THE INVENTION

### 1. Field of the Invention

The invention relates to a cooling system and, more particularly, to a cooling system that utilizes' a vapor compression refrigeration cycle to cool a heat generating source.

### 2. Description of Related Art

In recent years, hybrid vehicles, fuel cell vehicles, electric vehicles, and the like, that run using driving force of a motor become a focus of attention as one of measures against environmental issues. In such vehicles, electrical devices, such as a motor, a generator, an inverter, a converter and a battery, exchange electric power to generate heat. Therefore, these electrical devices need to be cooled. Then, there has been suggested a technique that utilizes a vapor compression refrigeration cycle, which is used as a vehicle air conditioner, to cool a heat generating element.

For example, Japanese Patent Application Publication No. 2006-290254 (JP 2006-290254 A) describes a cooling system for a hybrid vehicle. The cooling system includes: a compressor that is able to introduce and compress gaseous refrigerant; a main condenser that is able to cool high-pressure gaseous refrigerant using ambient air to condense the high-pressure gaseous refrigerant; an evaporator that is able to evaporate low-temperature liquid refrigerant to cool an refrigerating object; and a decompressing unit, and a heat exchanger, which is able to absorb heat from a motor, and a second decompressing unit are connected in parallel with the decompressing unit and the evaporator. Japanese Patent Application Publication No. 2007-69733 (JP 2007-69733 A) describes a system in which a heat exchanger that exchanges heat with air-conditioning air and a heat exchanger that exchanges heat with a heat generating element are arranged in parallel with each other in a refrigerant line routed from an expansion valve to a compressor and refrigerant for an air conditioner is utilized to cool the heat generating element.

Japanese Patent Application Publication No. 2005-90862 (JP 2005-90862 A) describes a cooling system in which a heat generating element cooling unit for cooling a heat generating element is provided in a bypass line that bypasses the decompressor, evaporator and compressor of an air-conditioning refrigeration cycle. Japanese Patent Application Publication No. 2001-309506 (JP 2001-309506 A) describes a cooling system that circulates refrigerant of a vehicle air-conditioning refrigeration cycle through a cooling member of an inverter circuit portion that executes drive control over a vehicle drive motor and, when cooling air-conditioning air stream is not required, cooling of air-conditioning air stream by an evaporator of the vehicle air-conditioning refrigeration cycle is suppressed.

In the cooling system described in JP 2006-290254 A, in order to cool a heat generating source, such as electrical devices that are typically a motor, a DC/DC converter and an inverter, it is necessary to constantly operate the compressor. Therefore, there is a problem that the power consumption of the compressor increases and the fuel economy of the vehicle deteriorates. In addition, the heat exchanger that exchanges heat with the heat generating source is connected in parallel with the' evaporator, so refrigerant for cooling the heat generating source is not used for cooling, and there is a problem that cooling performance is traded off.
WO 2005/071328 A1 shows as closest prior art document a cooling system with two condenser parts and an internal heat exchanger.

### SUMMARY OF THE INVENTION

The invention provides a cooling system that is able to reliably cool a heat generating source while ensuring cooling performance, and that is able to reduce the power consumption of a compressor.

An aspect of the invention relates to a cooling system that cools a heat generating source. The cooling system includes: a compressor that circulates refrigerant; a first heat exchanger and a second heat exchanger that carry out heat exchange between the refrigerant and outside air; a decompressor that decompresses the refrigerant; a third heat exchanger that carries out heat exchange between the refrigerant and air-conditioning air; a cooling portion that is provided in a path of the refrigerant flowing between the first heat exchanger and the second heat exchanger and that uses the refrigerant to cool the heat generating source; a first line through which the refrigerant flows between the cooling portion and the second heat exchanger; a second line through which the refrigerant flows between the third heat exchanger and the compressor; and an internal heat exchanger in which the refrigerant that flows through the first line and the refrigerant that flows through the second line exchange heat with each other.

In the cooling system, the internal heat exchanger may be arranged between the cooling portion and the second heat exchanger.

The cooling system may further include: a third line through which the refrigerant flows between the compressor and the first heat exchanger; and a fourth line that provides fluid communication between the first line and the third line. The cooling system may further include a selector valve that switches a state of fluid communication between the fourth line and the first line and third line. In the cooling system, the selector valve may be configured so as to switch the state of fluid communication into a state where the refrigerant flows through the fourth line during a stop of the compressor. In the cooling system, the cooling portion may be arranged below the first heat exchanger.

The cooling system may further include a four-way valve that switches between flow of the refrigerant from the compressor toward the first heat exchanger and flow of the refrigerant from the compressor toward the third heat exchanger.

In the cooling system, the first heat exchanger and the second heat exchanger may be integrally arranged.

With the cooling system according to the aspect of the invention, it is possible to reliably cool a heat generating source while ensuring cooling performance, and it is possible to reduce the power consumption of a compressor.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view that shows the configuration of a cooling system according to a first embodiment of the invention;
FIG. 2 is a Mollier chart that shows the state of refrigerant during cooling operation of a vapor compression refrigeration cycle according to the first embodiment of the invention;
FIG. 3A to FIG. 3D are graphs that schematically show opening degree control over a flow regulating valve;
FIG. 4 is a schematic view that shows the cooling system in a state where a four-way valve is switched;
FIG. 5 is a Mollier chart that shows the state of refrigerant during heating operation of a vapor compression refrigeration cycle according to the first embodiment of the invention;
FIG. 6 is a schematic view that shows the flow of refrigerant that cools an HV device during operation of the vapor compression refrigeration cycle;
FIG. 7 is a schematic view that shows the flow of refrigerant that cools the HV device during a stop of the vapor compression refrigeration cycle;
FIG. 8 is a schematic view that shows the configuration of a cooling system according to a second embodiment of the invention; and
FIG. 9 is a schematic view that shows an example of the internal structure of a heat exchanger according to the second embodiment of the invention.

### DETAILED DESCRIPTION OF EMBODIMENTS

Hereinafter, embodiments of the invention will be described with reference to the accompanying drawings. Note that, in the following drawings, like reference numerals denote the same or corresponding portions and the description thereof is not repeated.

### First Embodiment

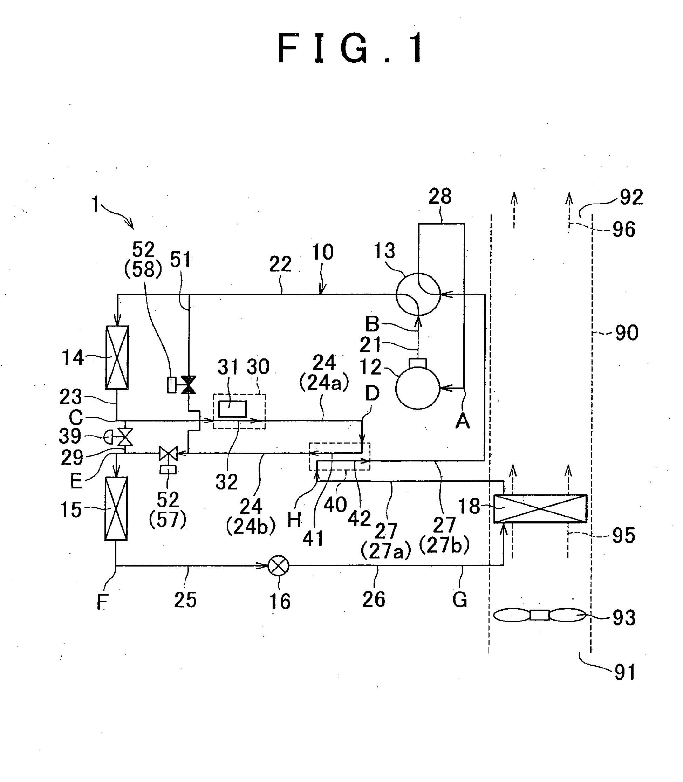

FIG. 1 is a schematic view that shows the configuration of a cooling system 1 according to a first embodiment. As shown in FIG. 1, the cooling system 1 includes a vapor compression refrigeration cycle 10. The vapor compression refrigeration cycle 10 is, for example, mounted on a vehicle in order to cool or heat the cabin of the vehicle. Cooling using the vapor compression refrigeration cycle 10 is performed, for example, when a switch for cooling is turned on or when an automatic control mode in which the temperature in the cabin of the vehicle is automatically adjusted to a set temperature is selected and the temperature in the cabin is higher than the set temperature. Heating using the vapor compression refrigeration cycle 10 is performed, for example, when a switch for heating is turned on or when the automatic control mode is selected and the temperature in the cabin is lower than the set temperature.

The vapor compression refrigeration cycle 10 includes a compressor 12, a heat exchanger 14 that serves as a first heat exchanger, a heat exchanger 15 that serves as a second heat exchanger, an expansion valve 16 that is an example of a decompressor, and a heat exchanger 18 that serves as a third heat exchanger. The vapor compression refrigeration cycle 10 further includes a four-way valve 13. The four-way valve 13 is arranged so as to be able to switch between flow of refrigerant from the compressor 12 toward the heat exchanger 14 and flow of refrigerant from the compressor 12 toward the heat exchanger 18.

The compressor 12 is actuated by a motor or engine equipped for the vehicle as a power source, and adiabatically compresses refrigerant gas to obtain superheated refrigerant gas. The compressor 12 introduces and compresses gaseous refrigerant flowing during operation of the vapor compression refrigeration cycle 10, and discharges high-temperature and high-pressure gaseous refrigerant. The compressor 12 discharges refrigerant to circulate the refrigerant in the vapor compression refrigeration cycle 10.

Each of the heat exchangers 14, 15 and 18 includes tubes and fins. The tubes flow refrigerant. The fins are used to exchange heat between refrigerant flowing through the tubes and air around the heat exchanger 14, 15 or 18. Each of the heat exchangers 14, 15 and 18 exchanges heat between refrigerant and air stream supplied by natural draft generated as the vehicle runs or air stream supplied by a fan.

The expansion valve 16 causes high-pressure liquid refrigerant to be sprayed through a small hole to expand into low-temperature and low-pressure atomized refrigerant. The expansion valve 16 decompresses condensed refrigerant liquid into wet steam in a gas-liquid mixing state. Note that a decompressor for decompressing refrigerant liquid is not limited to the expansion valve 16 that carries out throttle expansion; instead, the decompressor may be a capillary tube.

The vapor compression refrigeration cycle 10 further includes refrigerant lines 21 to 28. The refrigerant line 21 provides fluid communication between the compressor 12 and the four-way valve 13. Refrigerant flows from the compressor 12 toward the four-way valve 13 via the refrigerant line 21. The refrigerant line 22 provides fluid communication between the four-way valve 13 and the heat exchanger 14. Refrigerant flows from one of the four-way valve 13 and the heat exchanger 14 toward the other via the refrigerant line 22. The refrigerant line 23 provides fluid communication between the heat exchanger 14 and a cooling portion 30 (described later). Refrigerant flows from one of the heat exchanger 14 and the cooling portion 30 toward the other via the refrigerant line 23. The refrigerant line 24 provides fluid communication between the cooling portion 30 and the heat exchanger 15. Refrigerant flows from one of the cooling portion 30 and the heat exchanger 15 toward the other via the refrigerant line 24.

The refrigerant line 25 provides fluid communication between the heat exchanger 15 and the expansion valve 16. Refrigerant flows from one of the heat exchanger 15 and the expansion valve 16 toward the other via the refrigerant line 25. The refrigerant line 26 provides fluid communication between the expansion valve 16 and the heat exchanger 18. Refrigerant flows from one of the expansion valve 16 and the heat exchanger 18 toward the other via the refrigerant line 26. The refrigerant line 27 provides fluid communication between the heat exchanger 18 and the four-way valve 13. Refrigerant flows from one of the heat exchanger 18 and the four-way valve 13 toward the other via the refrigerant line 27. The refrigerant line 28 provides fluid communication between the four-way valve 13 and the compressor 12. Refrigerant flows from the four-way valve 13 toward the compressor 12 via the refrigerant line 28.

The vapor compression refrigeration cycle 10 is formed such that the compressor 12, the heat exchangers 14 and 15, the expansion valve 16 and the heat exchanger 18 are coupled by the refrigerant lines 21 to 28. Note that refrigerant used in the vapor compression refrigeration cycle 10 may be, for example, carbon dioxide, hydrocarbon, such as propane and isobutane, ammonia, water, or the like.

The cooling portion 30 is provided in the path of refrigerant flowing between the heat exchanger 14 and the heat exchanger 15. Because the cooling portion 30 is provided, the path of refrigerant between the heat exchanger 14 and the heat exchanger 15 is divided into the refrigerant line 23 closer to the heat exchanger 14 than the cooling portion 30 and the refrigerant line 24 closer to the expansion valve 16 than the cooling portion 30. The cooling portion 30 includes a hybrid vehicle (HV) device 31 and a cooling line 32. The HV device 31 is an electrical device mounted on the vehicle. The cooling line 32 is a line through which refrigerant flows. The HV device 31 is an example of a heat generating source. One end portion of the cooling line 32 is connected to the refrigerant line 23. The other end portion of the cooling line 32 is connected to the refrigerant line 24.

Refrigerant flowing between the heat exchanger 14 and the expansion valve 16 flows via the cooling line 32. When refrigerant flows through the cooling line 32, the refrigerant takes heat from the HV device 31 to cool the HV device 31. The cooling portion 30 is configured to be able to exchange heat between the HV device 31 and refrigerant because of the cooling line 32. In the present embodiment, the cooling portion 30, for example, has the cooling line 32 that is formed such that the outer peripheral surface of the cooling line 32 is in direct contact with the casing of the HV device 31. The cooling line 32 has a portion adjacent to the casing of the HV device 31. At that portion, heat is exchangeable between refrigerant, flowing through the cooling line 32, and the HV device 31.

The HV device 31 is directly connected to the outer peripheral surface of the cooling line 32 that forms part of the path of refrigerant, routed from the heat exchanger 14 to the heat exchanger 15 in the vapor compression refrigeration cycle 10, and is cooled. The HV device 31 is arranged on the outside of the cooling line 32, so the HV device 31 does not interfere with flow of refrigerant flowing inside the cooling line 32. Therefore, the pressure loss of the vapor compression refrigeration cycle 10 does not increase, so the HV device 31 may be cooled without increasing the power of the compressor 12.

Alternatively, the cooling portion 30 may include a selected known heat pipe that is interposed between the HV device 31 and the cooling line 32. In this case, the HV device 31 is connected to the outer peripheral surface of the cooling line 32 via the heat pipe, and heat is transferred from the HV device 31 to the cooling line 32 via the heat pipe to thereby cool the HV device 31. The HV device 31 serves as a heating portion for heating the heat pipe, and the cooling line 32 serves as a cooling portion for cooling the heat pipe to thereby increase the heat-transfer efficiency between the cooling line 32 and the HV device 31, so the cooling efficiency of the HV device 31 may be improved. For example, a Wick heat pipe may be used.

Heat may be reliably transferred from the HV device 31 to the cooling line 32 by the heat pipe, so there may be a distance between the HV device 31 and the cooling line 32, and complex arrangement of the cooling line 32 is not required to bring the cooling line 32 into contact with the HV device 31. As a result, it is possible to improve the flexibility of arrangement of the HV device 31.

The HV device 31 includes an electrical device that exchanges electric power to generate heat. The electrical device includes at least any one of, for example, an inverter used to convert direct-current power to alternating-current power, a motor generator that is a rotating electrical machine, a battery that is an electrical storage device, a converter that is used to step up the voltage of the battery and a DC/DC converter that is used to step down the voltage of the battery. The battery is a secondary battery, such as a lithium ion battery and a nickel metal hydride battery. A capacitor may be used instead of the battery.

The heat exchanger 18 is arranged inside a duct 90 through which air flows. The heat exchanger 18 exchanges heat between refrigerant and air-conditioning air flowing through the duct 90 to adjust the temperature of air-conditioning air. The duct 90 has a duct inlet 91 and a duct outlet 92. The duct inlet 91 is an inlet through which air-conditioning air flows into the duct 90. The duct outlet 92 is an outlet through which air-conditioning air flows out from the duct 90. A fan 93 is arranged near the duct inlet 91 inside the duct 90.

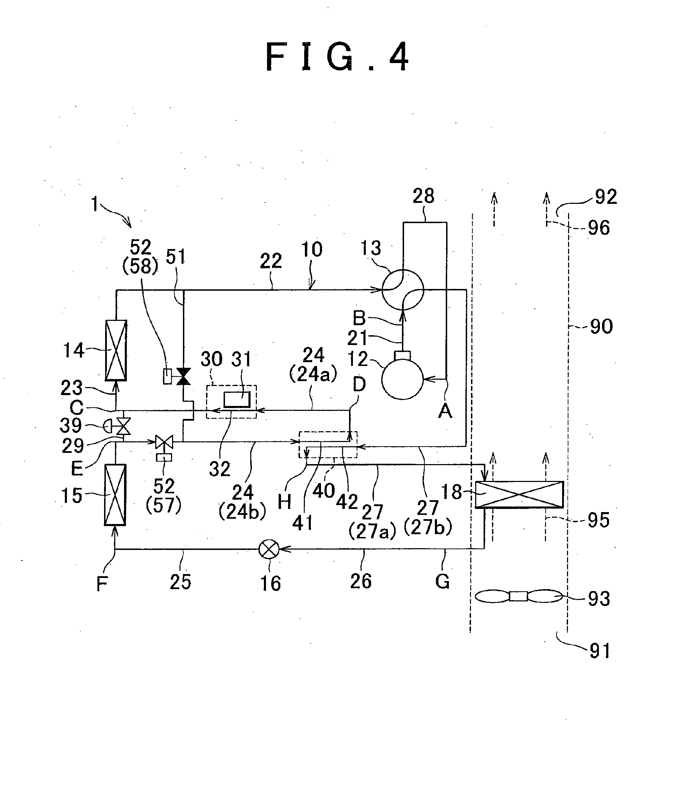

As the fan 93 is driven, air flows through the duct 90. As the fan 93 operates, air-conditioning air flows into the duct 90 via the duct inlet 91. Air flowing into the duct 90 may be outside air or may be air in the cabin of the vehicle. The arrow 95 in FIG. 1 and FIG. 4 indicates flow of air-conditioning air that flows via the heat exchanger 18 and exchanges heat with refrigerant in the vapor compression refrigeration cycle 10. During cooling operation, air-conditioning air is cooled in the heat exchanger 18, and refrigerant receives heat transferred from air-conditioning air to be heated. During heating operation, air-conditioning air is heated in the heat exchanger 18, and refrigerant transfers heat to air-conditioning air to be cooled. The arrow 96 indicates flow of air-conditioning air that is adjusted in temperature by the heat exchanger 18 and that flows out from the duct 90 via the duct outlet 92.

Refrigerant that flows through the refrigerant line 24 as a first line between the cooling portion 30 and the heat exchanger 15 and refrigerant that flows through the refrigerant line 27 as a second line between the heat exchanger 18 and the four-way valve 13 exchange heat with each other in an internal heat exchanger 40. The cooling system 1 includes the internal heat exchanger 40 in which refrigerant that flows through the refrigerant line 24 and refrigerant that flows through the refrigerant line 27 exchange heat with each other. Because the internal heat exchanger 40 is provided, the refrigerant line 24 is divided into a refrigerant line 24a closer to the cooling portion 30 than the internal heat exchanger 40 and a refrigerant line 24b closer to the heat exchanger 15 than the internal heat exchanger 40. The refrigerant line 27 is divided into a refrigerant line 27a closer to the heat exchanger 18 than the internal heat exchanger 40 and a refrigerant line 27b closer to the four-way valve 13 than the internal heat exchanger 40.

The internal heat exchanger 40 has a heat exchanging line 41 that is in fluid communication with the refrigerant line 24 and a heat exchanging line 42 that is in fluid communication with the refrigerant line 27. One end portion of the heat exchanging line 41 is connected to the refrigerant line 24a, and the other end portion is connected to the refrigerant line 24b. During cooling operation shown in FIG. 1, refrigerant flows from the cooling portion 30 to the internal heat exchanger 40 via the refrigerant line 24a, flows in the heat exchanging line 41, and reaches the heat exchanger 15 via the refrigerant line 24b. One end portion of the heat exchanging line 42 is connected to the refrigerant line 27a, and the other end portion is connected to the refrigerant line 27b. During cooling operation shown in FIG. 1, refrigerant flows from the heat exchanger 18 to the internal heat exchanger 40 via the refrigerant line 27a, flows in the heat exchanging line 42, reaches the four-way valve 13 via the refrigerant line 27b, and further flows into the compressor 12 via the refrigerant line 28.

The internal heat exchanger 40 has a selected structure such that heat is exchangeable between refrigerant that flows through the heat exchanging line 41 and refrigerant that flows through the heat exchanging line 42. For example, a pipe that forms the heat exchanging line 41 and a pipe that forms the heat exchanging line 42 may be arranged such that the respective outer peripheral surfaces directly contact with each other or may be arranged via a high thermal conductive member or a heat pipe. In addition, for example, it is applicable that two through holes are formed in a metal block member having a high thermal conductivity, one of the through holes serves as the heat exchanging line 41 and the other one of the through holes serves as the heat exchanging line 42.

During cooling operation, refrigerant flows in the vapor compression refrigeration cycle 10 so as to sequentially pass through points A, B, C, D, E, F, G and H shown in FIG. 1, and refrigerant circulates among the compressor 12, the heat exchangers 14 and 15, the expansion valve 16 and the heat exchanger 18. Refrigerant passes through a refrigerant circulation path that is formed by sequentially connecting the compressor 12, the heat exchangers 14 and 15, the expansion valve 16 and the heat exchanger 18 by the refrigerant lines 21 to 28 to circulate in the vapor compression refrigeration cycle 10.

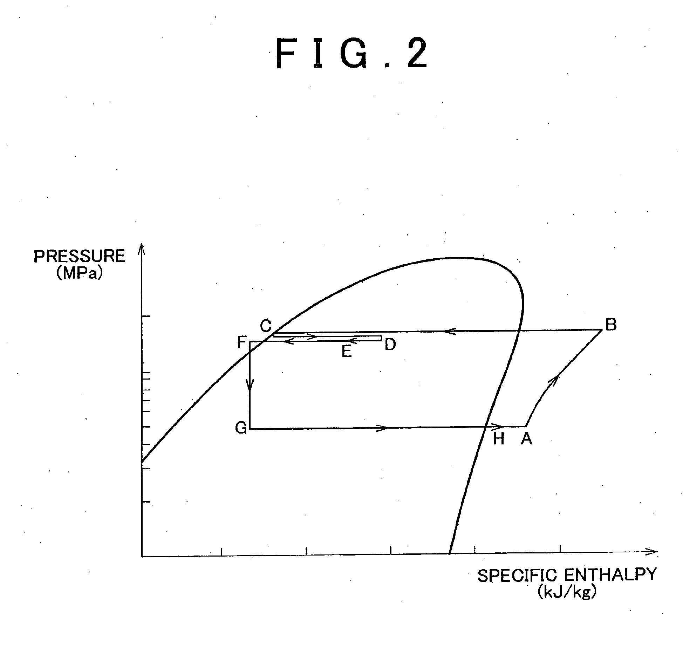

FIG. 2 is a Mollier chart that shows the state of refrigerant during cooling operation of the vapor compression refrigeration cycle 10 according to the first embodiment. In FIG. 2, the abscissa axis represents the specific enthalpy (unit: kJ/kg) of refrigerant, and the ordinate axis represents the absolute pressure (unit: MPa) of refrigerant. The curve in the chart is the saturation vapor line and saturation liquid line of refrigerant. FIG. 2 shows the thermodynamic state of refrigerant at points (that is, points A, B, C, D, E, F, G and H) in the vapor compression refrigeration cycle 10 when refrigerant flows from the compressor 12 into the refrigerant line 23 via the heat exchanger 14, cools the HV device 31 and returns from the refrigerant line 24 to the compressor 12 via the heat exchanger 15, the expansion valve 16 and the heat exchanger 18.

As shown in FIG. 2, refrigerant (point A) in a superheated steam state, introduced into the compressor 12, is adiabatically compressed in the compressor 12 along a constant specific entropy line. As refrigerant is compressed, the refrigerant increases in pressure and temperature into high-temperature and high-pressure superheated steam having a high degree of superheat (point B), and then the refrigerant flows to the heat exchanger 14.

High-pressure refrigerant steam flowing into the heat exchanger 14 exchanges heat with outside air in the heat exchanger 14 to be cooled. Refrigerant becomes dry saturated steam from superheated steam with a constant pressure, releases latent heat of condensation to gradually liquefy into wet steam in a gas-liquid mixing state, and becomes saturated liquid as the entire refrigerant condenses (point C). The heat exchanger 14 causes superheated refrigerant gas, compressed in the compressor 12, to release heat to an external medium with a constant pressure and to become refrigerant liquid. Gaseous refrigerant discharged from the compressor 12 releases heat to the surroundings to be cooled in the heat exchanger 14 to thereby condense (liquefy). Owing to heat exchange in the heat exchanger 14, the temperature of refrigerant decreases, and refrigerant liquefies.

High-pressure liquid refrigerant liquefied in the heat exchanger 14 flows to the cooling portion 30 via the refrigerant line 23, and cools the HV device 31. In the cooling portion 30, heat is released to liquid refrigerant that is condensed as it passes through the heat exchanger 14 to thereby cool the HV device 31. Refrigerant is heated by exchanging heat with the HV device 31, and the dryness of the refrigerant increases. Refrigerant receives latent heat from the HV device 31 to partially vaporize into wet steam that mixedly contains saturated liquid and saturated steam (point D).

Refrigerant flowing out from the cooling portion 30 flows to the internal heat exchanger 40 via the refrigerant line 24a. As heat is transferred from refrigerant that flows through the heat exchanging line 41 to refrigerant that flows through the heat exchanging line 42 inside the internal heat exchanger 40, refrigerant that flows through the heat exchanging line 41 is cooled, and refrigerant that flows through the heat exchanging line 42 is heated. The percentage of saturated liquid increases and the percentage of saturated steam reduces within refrigerant that flows through the heat exchanging line 41 by heat exchange in the internal heat exchanger 40, so the dryness of the refrigerant in a wet steam state, flowing through the heat exchanging line 41, reduces (the wetness increases) (point E).

After that, refrigerant flows into the heat exchanger 15. Wet steam of refrigerant exchanges heat with outside air in the heat exchanger 15 to be cooled to thereby condense again, becomes saturated liquid as the entire refrigerant condenses, and further releases sensible heat to become supercooled liquid (point F). After that, refrigerant flows into the expansion valve 16 via the refrigerant line 25. In the expansion valve 16, refrigerant in a supercooled liquid state is throttle-expanded, and the refrigerant decreases in temperature and pressure with the specific enthalpy of the refrigerant unchanged to become low-temperature and low-pressure wet steam in a gas-liquid mixing state (point G).

Refrigerant in a wet steam state from the expansion valve 16 flows into the heat exchanger 18 via the refrigerant line 26. Refrigerant in a wet steam state flows into the tubes of the heat exchanger 18. When refrigerant flows through the tubes of the heat exchanger 18, the refrigerant absorbs heat of air in the cabin of the vehicle as latent heat of vaporization via the fins to evaporate with a constant pressure. As the entire refrigerant becomes dry saturated steam, the temperature of refrigerant steam further increases by sensible heat to become superheated steam (point H). Refrigerant absorbs heat from the surroundings in the heat exchanger 18 to be heated.

Refrigerant flowing out from the heat exchanger 18 flows to the internal heat exchanger 40 via the refrigerant line 27a and flows through the heat exchanging line 42. By the above described heat exchange in the internal heat exchanger 40, refrigerant that flows through the heat exchanging line 42 is heated, and a degree of superheat of the refrigerant in a superheated steam state, flowing through the heat exchanging line 42, increases (point A). After that, refrigerant is introduced into the compressor 12 via the refrigerant line 27b, the four-way valve 13 and the refrigerant line 28. The compressor 12 compresses refrigerant that flows from the internal heat exchanger 40. Refrigerant continuously repeats changes among the compressed state, the condensed state, the throttle-expanded state and the evaporated state in accordance with the above described cycle.

Note that, in the above description of the vapor compression refrigeration cycle, a theoretical refrigeration cycle is described; however, in the actual vapor compression refrigeration cycle 10, it is, of course, necessary to consider a loss in the compressor 12, a pressure loss of refrigerant and a heat loss.

During cooling operation, atomized refrigerant flowing inside the heat exchanger 18 vaporizes to absorb heat of ambient air introduced so as to contact with the heat exchanger 18. The heat exchanger 18 uses low-temperature and low-pressure refrigerant decompressed by the expansion valve 16 to absorb heat of vaporization, required at the time when wet steam of refrigerant evaporates into refrigerant gas, from air-conditioning air flowing to the cabin of the vehicle to thereby cool the cabin of the vehicle. Air-conditioning air of which heat is absorbed by the heat exchanger 18 to decrease its temperature flows into the cabin of the vehicle to cool the cabin of the vehicle.

During operation of the vapor compression refrigeration cycle 10, refrigerant absorbs heat of vaporization from air in the cabin of the vehicle in the heat exchanger 18 to thereby cool the cabin. In addition, high-pressure liquid refrigerant from the heat exchanger 14 flows to the cooling portion 30 and exchanges heat with the HV device 31 to thereby cool the HV device 31. The cooling system 1 cools the HV device 31, which is the heat generating source mounted on the vehicle, by utilizing the vapor compression refrigeration cycle 10 for air-conditioning the cabin of the vehicle. Note that the temperature required to cool the HV device 31 is desirably at least lower than the upper limit of a target temperature range of the HV device 31.

During cooling operation, refrigerant is cooled into a saturated liquid state in the heat exchanger 14, and refrigerant in a wet steam state, which receives latent heat of vaporization from the HV device 31 to be partially vaporized, is cooled again in the heat exchanger 15. Refrigerant changes in state at a constant temperature until the refrigerant in a wet steam state completely condenses into saturated liquid. The heat exchanger 15 further supercools liquid refrigerant to a degree of supercooling required to cool the cabin of the vehicle. A degree of supercooling of refrigerant does not need to be excessively increased, so the capacity of each of the heat exchangers 14 and 15 may be reduced. Thus, the cooling performance for cooling the cabin may be ensured, and the size of each of the heat exchangers 14 and 15 may be reduced, so it is possible to obtain the cooling system 1 that is reduced in size and that is advantageous in installation on the vehicle.

When low-temperature and low-pressure refrigerant after passing through the expansion valve 16 is used to cool the HV device 31, the cooling performance of air in the cabin in the heat exchanger 18 reduces and the cooling performance for cooling the cabin decreases. In contrast to this, in the cooling system 1 according to the present embodiment, in the vapor compression refrigeration cycle 10, high-pressure refrigerant discharged from the compressor 12 is condensed by both the heat exchanger 14 that serves as a first condenser and the heat exchanger 15 that serves as a second condenser. The two-stage heat exchangers 14 and 15 are arranged between the compressor 12 and the expansion valve 16, and the cooling portion 30 for cooling the HV device 31 is provided between the heat exchanger 14 and the heat exchanger 15. The heat exchanger 15 is provided in the path of refrigerant flowing from the cooling portion 30 toward the expansion valve 16.

By sufficiently cooling refrigerant, which receives latent heat of vaporization from the HV device 31 to be heated, in the heat exchanger 15, the refrigerant has a temperature and a pressure that are originally required to cool the cabin of the vehicle at the outlet of the expansion valve 16. Therefore, it is possible to sufficiently increase the amount of heat externally received when refrigerant evaporates in the heat exchanger 18. Thus, by setting the heat radiation performance for the heat exchanger 15 so as to be able to sufficiently cool refrigerant, the HV device 31 may be cooled without any influence on the cooling performance for cooling air in the cabin. Thus, both the cooling performance for cooling the HV device 31 and the cooling performance for cooling the cabin may be reliably ensured.

When refrigerant flowing from the heat exchanger 14 to the cooling portion 30 cools the HV device 31, the refrigerant receives heat from the HV device 31 to be heated. As refrigerant is heated to a saturated steam temperature or above and the entire amount of the refrigerant vaporizes in the cooling portion 30, the amount of heat exchanged between the refrigerant and the HV device 31 reduces, and the HV device 31 cannot be efficiently cooled, and, in addition, pressure loss at the time when the refrigerant flows in the pipe increases. Therefore, it is desirable to sufficiently cool refrigerant in the heat exchanger 14 such that the entire amount of refrigerant does not vaporize after cooling the HV device 31.

Specifically, the state of refrigerant at the outlet of the heat exchanger 14 is brought close to saturated liquid, and, typically, refrigerant is placed in a state on the saturated liquid line at the outlet of the heat exchanger 14. Because the heat exchanger 14 is capable of sufficiently cooling refrigerant in this way, the heat radiation performance of the heat exchanger 14 for causing refrigerant to release heat is higher than the heat radiation performance of the heat exchanger 15. By sufficiently cooling refrigerant in the heat exchanger 14 having relatively high heat radiation performance, refrigerant that has received heat from the HV device 31 may be maintained in a wet steam state, and a reduction in the amount of heat exchanged between refrigerant and the HV device 31 may be avoided, so it is possible to sufficiently cool the HV device 31. Refrigerant in a wet steam state after cooling the HV device 31 is efficiently cooled again in the heat exchanger 15, and is cooled into a supercooled liquid state below a saturated temperature. Thus, it is possible to provide the cooling system 1 that ensures both the cooling performance for cooling the cabin and the cooling performance for cooing the HV device 31.

Referring back to FIG. 1, the refrigerant lines 23 and 24 and a refrigerant line 29 are connected in parallel in the path of refrigerant flowing between the heat exchanger 14 and the heat exchanger 15. The refrigerant line 29 provides direct fluid communication between the refrigerant line 23 and the refrigerant line 24. The refrigerant line 29 forms part of the path of refrigerant flowing between the heat exchanger 14 and the heat exchanger 15. The cooling system 1 includes the refrigerant line 29 that forms the path that does not pass through the cooling portion 30, and the refrigerant lines 23 and 24 and the cooling line 32 that form the path that passes through the cooling portion 30. The path of refrigerant between the heat exchanger 14 and the heat exchanger 15 branches off, and part of refrigerant flows to the cooling portion 30.

The refrigerant lines 23 and 24 and the cooling line 32 that form the path passing through the cooling portion 30 and the refrigerant line 29 that forms the path not passing through the cooling portion 30 are provided in parallel with each other as the path through which refrigerant flows between the heat exchanger 14 and the heat exchanger 15. The cooling system for cooling the HV device 31, including the refrigerant lines 23 and 24, is connected in parallel with the refrigerant line 29. The path of refrigerant flowing between the heat exchanger 14 and the heat exchanger 15 without passing though the cooling portion 30 and the path of refrigerant flowing via the cooling portion 30 are provided in parallel with each other, and only part of refrigerant is caused to flow to the refrigerant lines 23 and 24. By so doing, only part of refrigerant flowing between the heat exchanger 14 and the heat exchanger 15 flows to the cooling portion 30.

Refrigerant in an amount required to cool the HV device 31 in the cooling portion 30 is caused to flow to the refrigerant lines 23 and 24, and not the entire refrigerant flows to the cooling portion 30. Thus, the HV device 31 is appropriately cooled, and it is possible to prevent excessive cooling of the HV device 31. In addition, it is possible to reduce the pressure loss associated with flow of refrigerant to the cooling system for cooling the HV device 31, including the refrigerant lines 23 and 24 and the cooling line 32. Accordingly, it is possible to reduce power consumption required to operate the compressor 12 for circulating refrigerant.

A flow regulating valve 39 is provided in the refrigerant line 29. The flow regulating valve 39 is arranged in the refrigerant line 29 that forms part of the path of refrigerant flowing between the heat exchanger 14 and the heat exchanger 15. The flow regulating valve 39 changes its valve opening degree to increase or reduce a pressure loss of refrigerant flowing in the refrigerant line 29 to thereby selectively adjust the flow rate of refrigerant flowing in the refrigerant line 29 and the flow rate of refrigerant flowing in the cooling system for cooing the HV device 31, including the cooling line 32.

For example, as the flow regulating valve 39 is fully closed to set the valve opening degree at 0%, the entire amount of refrigerant from the heat exchanger 14 flows into the cooling portion 30. When the valve opening degree of the flow regulating valve 39 is increased, the flow rate of refrigerant that flows directly to the heat exchanger 15 via the refrigerant line 29 increases and the flow rate of refrigerant that flows to the cooling portion 30 to cool the HV device 31 reduces within refrigerant that flows from the heat exchanger 14 to the refrigerant line 23. When the valve opening degree of the flow regulating valve 39 is reduced, the flow rate of refrigerant that directly flows to the heat exchanger 15 via the refrigerant line 29 reduces and the flow rate of refrigerant that flows to the cooling portion 30 to cool the HV device 31 increases within refrigerant that flows from the heat exchanger 14 to the refrigerant line 23.

As the valve opening degree of the flow regulating valve 39 is increased, the flow rate of refrigerant that cools the HV device 31 reduces, so cooling performance for cooling the HV device 31 decreases. As the valve opening degree of the flow regulating valve 39 reduces, the flow rate of refrigerant that cools the HV device 31 increases, so cooling performance for cooling the HV device 31 improves. The flow regulating valve 39 is used to make it possible to optimally adjust the amount of refrigerant flowing to the HV device 31, so it is possible to reliably prevent excessive cooling of the HV device 31, and, in addition, it is possible to reliably reduce pressure loss associated with flow of refrigerant in the cooling system for cooling the HV device 31 and the power consumption of the compressor 12 for circulating refrigerant.

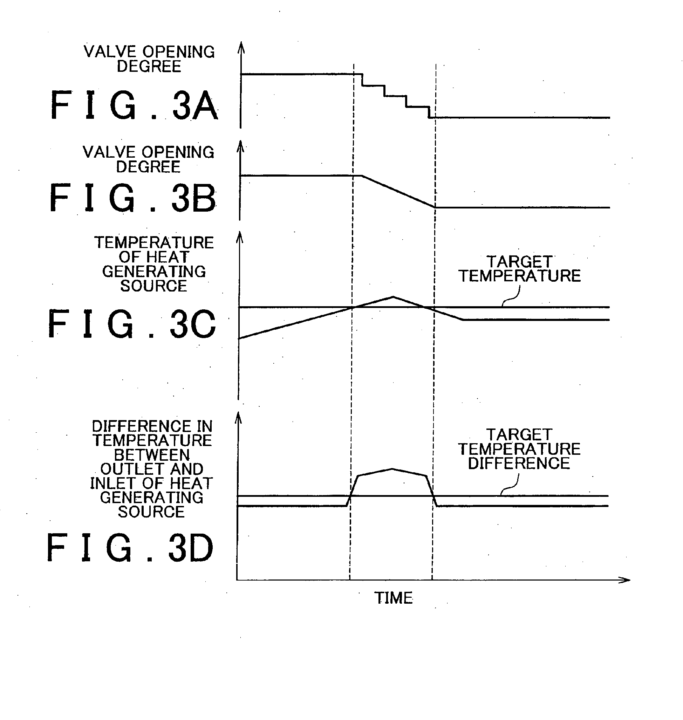

An example of control associated with adjustment of the valve opening degree of the flow regulating valve 39 will be described below. FIG. 3A to FIG. 3D are graphs that schematically show opening degree control over the flow regulating valve 39. The abscissa axis shown in each of the graphs of FIG. 3A to FIG. 3D represents time. The ordinate axis of the graph of FIG. 3A represents a valve opening degree in the case where the flow regulating valve 39 is an electric expansion valve that uses a stepping motor. The ordinate axis of the graph of FIG. 3B represents a valve opening degree in the case where the flow regulating valve 39 is a thermostatic expansion valve that opens or closes with a fluctuation in temperature. The ordinate axis of the graph of FIG. 3C represents the temperature of the HV device 31. The ordinate axis of the graph of FIG. 3D represents a difference in temperature between the inlet and outlet of the HV device 31.

As refrigerant flows via the cooling portion 30, the HV device 31 is cooled. The valve opening degree of the flow regulating valve 39 is, for example, adjusted by monitoring the temperature of the HV device 31 or the difference between the outlet temperature and inlet temperature of the HV device 31. For example, with reference to the graph of FIG. 3C, a temperature sensor that continuously measures the temperature of the HV device 31 is provided to monitor the temperature of the HV device 31. In addition, for example, with reference to the graph of FIG. 3D, a temperature sensor that measures the inlet temperature and outlet temperature of the HV device 31 is provided to monitor the difference in temperature between the outlet and inlet of the HV device 31.

As the temperature of the HV device 31 is higher than a target temperature or the difference in temperature between the outlet and inlet of the HV device 31 is larger than a target temperature difference (for example, 3 to 5°C), the opening degree of the flow regulating valve 39 is reduced as shown in the graph of FIG. 3A and the graph of FIG. 3B. By throttling the opening degree of the flow regulating valve 39, the flow rate of refrigerant flowing to the cooling portion 30 increases as described above, so it is possible to further effectively cool the HV device 31. As a result, the temperature of the HV device 31 may be decreased to the target temperature or below as shown in the graph of FIG. 3C or the different in temperature between the outlet and inlet of the HV device 31 may be reduced to the target temperature difference or below as shown in the graph of FIG. 3D.

In this way, by optimally adjusting the valve opening degree of the flow regulating valve 39, refrigerant in an amount by which heat radiation performance required to keep the HV device 31 within an appropriate temperature range is ensured is ensured to thereby make it possible to appropriately cool the HV device 31. Thus, it is possible to reliably suppress occurrence of inconvenience that the HV device 31 is excessively heated to be damaged.

FIG. 4 is a schematic view that shows the cooling system 1 in a state where the four-way valve 13 is switched. By comparing FIG. 4 with FIG. 1, the four-way valve 13 is rotated by 90° to switch the path along which refrigerant flowing from the outlet of the compressor 12 into the four-way valve 13 flows out from the four-way valve 13. During cooling operation shown in FIG. 1, refrigerant compressed in the compressor 12 flows from the compressor 12 toward the heat exchanger 14. On the other hand, during heating operation shown in FIG. 4, refrigerant compressed in the compressor 12 flows from the compressor 12 toward the heat exchanger 18.

During heating operation, refrigerant flows in the vapor compression refrigeration cycle 10 so as to sequentially pass through points A, B, H, G, F, E, D and C shown in FIG. 4 to circulate through the compressor 12, the heat exchanger 18, the expansion valve 16 and the heat exchangers 15 and 14. Refrigerant passes through a refrigerant circulation path that is formed by sequentially connecting the compressor 12, the heat exchanger 18, the expansion valve 16 and the heat exchangers 15 and 14 by the refrigerant lines 21 to 28 to circulate in the vapor compression refrigeration cycle 10.

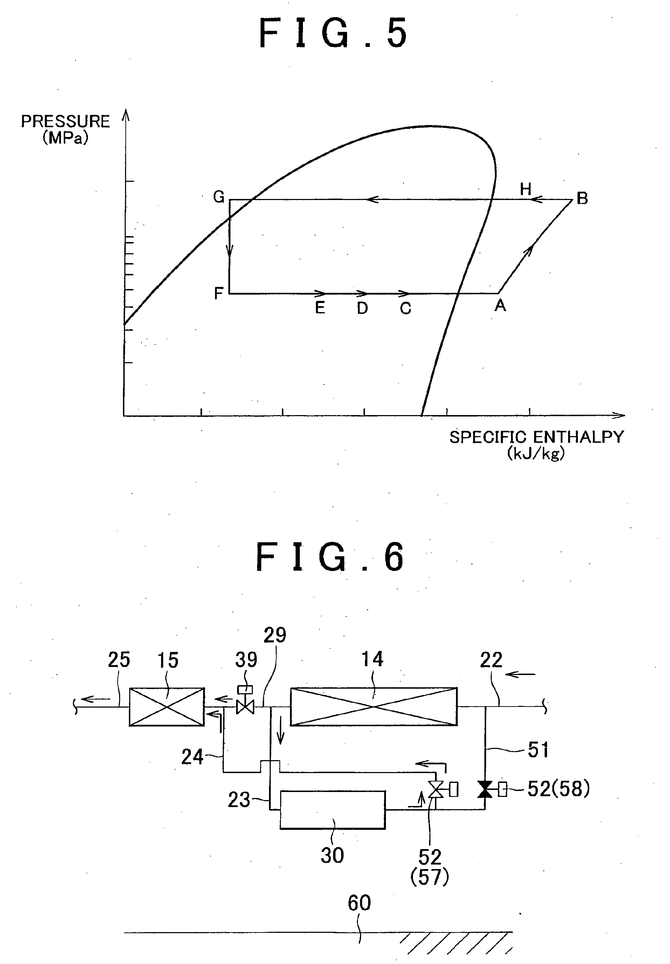

FIG. 5 is a Mollier chart that shows the state of refrigerant during heating operation of the vapor compression refrigeration cycle 10 according to the first embodiment. In FIG. 5, the abscissa axis represents the specific enthalpy (unit: kJ/kg) of refrigerant, and the ordinate axis represents the absolute pressure (unit: MPa) of refrigerant. The curve in the chart is the saturation vapor line and saturation liquid line of refrigerant. FIG. 5 shows the thermodynamic state of refrigerant at points (that is, points A, B, H, G, F, E, D and C) in the vapor compression refrigeration cycle 10 when refrigerant flows from the compressor 12 into the refrigerant line 24 via the heat exchanger 18, the expansion valve 16 and the heat exchanger 15, cools the HV device 31, and returns from the refrigerant line 23 to the compressor 12 via the heat exchanger 14.

As shown in FIG. 5, refrigerant in a superheated steam state (point A), introduced into the compressor 12, is adiabatically compressed in the compressor 12 along a constant specific entropy line. As refrigerant is compressed, the refrigerant increases in pressure and temperature into high-temperature and high-pressure superheated steam having a high degree of superheat (point B). Refrigerant flowing out from the compressor 12 flows to the internal heat exchanger 40. As heat is transferred from refrigerant that flows through the heat exchanging line 42 to refrigerant that flows through the heat exchanging line 41 inside the internal heat exchanger 40, refrigerant that flows through the heat exchanging line 42 is cooled, and refrigerant that flows through the heat exchanging line 41 is heated. By heat exchange in the internal heat exchanger 40, a degree of superheat of refrigerant that flows through the heat exchanging line 42 reduces. That is, the temperature of refrigerant in a superheated steam state decreases, and approaches a saturated temperature of refrigerant steam (point H).

After that, refrigerant flows to the heat exchanger 18. High-pressure refrigerant steam in the heat exchanger 18 is cooled in the heat exchanger 18, becomes dry saturated steam from superheated steam with a constant pressure, releases latent heat of condensation to gradually liquefy into wet steam in a gas-liquid mixing state, becomes saturated liquid as the entire refrigerant condenses, and further releases sensible heat to become supercooled liquid (point G). The heat exchanger 18 causes superheated refrigerant gas, compressed in the compressor 12, to release heat to an external medium with a constant pressure and to become refrigerant liquid. Gaseous refrigerant discharged from the compressor 12 releases heat to the surroundings to be cooled in the heat exchanger 18 to thereby condense (liquefy). Owing to heat exchange in the heat exchanger 18, the temperature of refrigerant decreases, and refrigerant liquefies. Refrigerant releases heat to the surroundings in the heat exchanger 18 to be cooled.

High-pressure liquid refrigerant liquefied in the heat exchanger 18 flows into the expansion valve 16 via the refrigerant line 26. In the expansion valve 16, refrigerant in a supercooled liquid state is throttle-expanded, and the refrigerant decreases in temperature and pressure with the specific enthalpy of the refrigerant unchanged to become low-temperature and low-pressure wet steam in a gas-liquid mixing state (point F). Refrigerant of which the temperature is decreased in the expansion valve 16 flows into the heat exchanger 15 via the refrigerant line 25. Refrigerant in a wet steam state flows into the tubes of the heat exchanger 15. When refrigerant flows through the tubes, the refrigerant absorbs heat of outside air via the fins as latent heat of vaporization to evaporate with a constant pressure. Refrigerant exchanges heat with outside air in the heat exchanger 15 to be heated, and the dryness of the refrigerant increases. Part of refrigerant receives latent heat in the heat exchanger 15 to vaporize, so the percentage of saturated steam contained in the refrigerant in a wet steam state increases (point E).

Refrigerant in a wet steam state, flowing out from the heat exchanger 15, flows to the internal heat exchanger 40 via the refrigerant line 24b and flows through the heat exchanging line 41. By the above described heat exchange in the internal heat exchanger 40, refrigerant that flows through the heat exchanging line 41 is heated, and the dryness of the refrigerant in a wet steam state, flowing through the heat exchanging line 41, increases (point D). Next, refrigerant flows to the cooling line 32 of the cooling portion 30 to cool the HV device 31. Refrigerant is heated by exchanging heat with the HV device 31, and the dryness of the refrigerant increases. Part of refrigerant receives latent heat from the HV device 31 to vaporize, so the percentage of saturated steam contained in the refrigerant in a wet steam state increases (point C).

Refrigerant in a wet steam state, flowing out from the cooling portion 30, flows into the heat exchanger 14 via the refrigerant line 23. Refrigerant in a wet steam state flows into the tubes of the heat exchanger 14. When refrigerant flows through the tubes, the refrigerant absorbs heat of outside air via the fins as latent heat of vaporization to evaporate with a constant pressure. As the entire refrigerant becomes dry saturated steam, the refrigerant steam further increases in temperature by sensible heat to become superheated steam (point A). Vaporized refrigerant is introduced into the compressor 12 via the refrigerant line 22. The compressor 12 compresses refrigerant flowing from the heat exchanger 14. Refrigerant continuously repeats changes among the compressed state, the condensed state, the throttle-expanded state and the evaporated state in accordance with the above described cycle.

During heating operation, refrigerant steam flowing inside the heat exchanger 18 condenses to release heat to ambient air introduced so as to contact with the heat exchanger 18. The heat exchanger 18 uses high-temperature and high-pressure refrigerant adiabatically compressed in the compressor 12 to release heat of condensation, required at the time when refrigerant gas condenses into wet steam of refrigerant, to air-conditioning air flowing to the cabin of the vehicle to thereby heat the cabin of the vehicle. Air-conditioning air that receives heat from the heat exchanger 18 to increase its temperature flows into the cabin of the vehicle to thereby heat the cabin of the vehicle.

During operation of the vapor compression refrigeration cycle 10, refrigerant releases heat of condensation to air in the cabin of the vehicle in the heat exchanger 18 to thereby heat the cabin. In addition, refrigerant in a wet steam state, flowing out from the heat exchanger 15, flows to the cooling portion 30 and exchanges heat with the HV device 31 to thereby cool the HV device 31. During heating as well, as in the case during cooling, the cooling system 1 utilizes the vapor compression refrigeration cycle 10 for air-conditioning the cabin of the vehicle to thereby cool the HV device 31.

The four-way valve 13 is used to switch the direction in which refrigerant flows in the vapor compression refrigeration cycle 10 between cooling operation and heating operation. During cooling operation, in the heat exchanger 18, low-temperature and low-pressure refrigerant throttle-expanded in the expansion valve 16 absorbs heat from air-conditioning air to cool the cabin. During heating operation, in the heat exchanger 18, high-temperature and high-pressure refrigerant adiabatically compressed in the compressor 12 releases heat to air-conditioning air to heat the cabin. The cooling system 1 uses the single heat exchanger 18 to be able to appropriately adjust the temperature of air-conditioning air flowing into the cabin of the vehicle during both cooling operation and heating operation. Thus, it is not required to arrange two heat exchangers that exchange heat with air-conditioning air, so the cost of the cooling system 1 may be reduced, and the size of the cooling system 1 may be reduced.

During both cooling operation and heating operation, refrigerant flows to the cooling portion 30 to exchange heat with the HV device 31 to thereby cool the HV device 31. The cooling system 1 cools the HV device 31, which is the heat generating source mounted on the vehicle, by utilizing the vapor compression refrigeration cycle 10 for air-conditioning the cabin of the vehicle. The vapor compression refrigeration cycle 10 that is provided in order to exchange heat with air-conditioning air in the heat exchanger 18 to air-condition the cabin of the vehicle is utilized to cool the HV device 31.

It is not necessary to provide a device, such as an exclusive water circulation pump and a cooling fan, in order to cool the HV device 31. Therefore, components required for the cooling system 1 to cool the HV device 31 may be reduced to make it possible to simplify the system configuration, so the manufacturing cost of the cooling system 1 may be reduced. In addition, it is not necessary to operate a power source, such as a pump and a cooling fan, in order to cool the HV device 31, and power consumption for operating the power source is not required. Thus, it is possible to reduce power consumption for cooling the HV device 31.

As shown in FIG. 1 and FIG. 4, the cooling system 1 according to the present embodiment further includes a communication line 51 that serves as a fourth line. The communication line 51 provides fluid communication between the refrigerant line 22 that serves as a third line, through which refrigerant flows between the compressor 12 and the heat exchanger 14, and the refrigerant line 24 (24b) that serves as the first line. A selector valve 52 is provided in the refrigerant line 24 and the communication line 51. The selector valve 52 switches the state of fluid communication between the communication line 51 and the refrigerant lines 24 and 22. The selector valve 52 switches between the open state and the closed state to thereby allow or interrupt flow of refrigerant via the communication line 51. By switching the path of refrigerant using the selector valve 52, refrigerant after cooling the HV device 31 may be caused to flow to any selected one of the paths, that is, to the heat exchanger 15 via the refrigerant line 24 or to the heat exchanger 14 via the communication line 51 and the refrigerant line 22.

More specifically, two valves 57 and 58 are provided as the selector valve 52. During cooling operation of the vapor compression refrigeration cycle 10, the valve 57 is fully open (valve opening degree 100%) and the valve 58 is fully closed (valve opening degree 0%), and the valve opening degree of the flow regulating valve 39 is adjusted such that a sufficient amount of refrigerant flows through the cooling portion 30. By so doing, refrigerant after cooling the HV device 31 may be reliably caused to flow to the heat exchanger 15 via the refrigerant line 24. On the other hand, during a stop of the vapor compression refrigeration cycle 10, the valve 58 is fully open and the valve 57 is fully closed, and, furthermore, the flow regulating valve 39 is fully closed. By so doing, it is possible to form an annular path that causes refrigerant to circulate between the cooling portion 30 and the heat exchanger 14.

FIG. 6 is a schematic view that shows flow of refrigerant that cools the HV device 31 during cooling operation of the vapor compression refrigeration cycle 10. When the compressor 12 is driven and the vapor compression refrigeration cycle 10 is operated, the flow regulating valve 39 is adjusted in valve opening degree such that a sufficient amount of refrigerant flows through the cooling portion 30. The selector valve 52 is operated so as to flow refrigerant from the cooling portion 30 to the expansion valve 16 via the heat exchanger 15. That is, as the valve 57 is fully open and the valve 58 is fully closed, the path of refrigerant that causes refrigerant to flow the whole of the cooling system 1 is selected. Therefore, the cooling performance of the vapor compression refrigeration cycle 10 may be ensured, and the HV device 31 may be efficiently cooled.

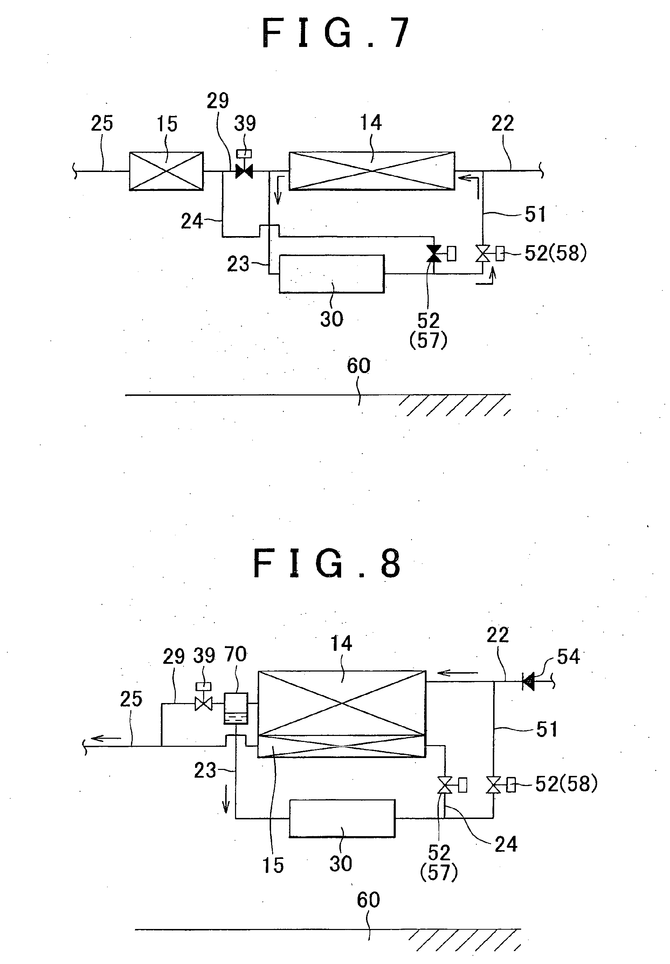

FIG. 7 is a schematic view that shows flow of refrigerant that cools the HV device 31 during a stop of the vapor compression refrigeration cycle 10. As shown in FIG. 7, when the compressor 12 is stopped and the vapor compression refrigeration cycle 10 is stopped, the selector valve 52 is operated so as to circulate refrigerant from the cooling portion 30 to the heat exchanger 14. That is, as the valve 57 is fully closed, the valve 58 is fully open and the flow regulating valve 39 is fully closed, refrigerant flows via the communication line 51. By so doing, a closed annular path that is routed from the heat exchanger 14 to the cooling portion 30 via the refrigerant line 23, further passes through the refrigerant line 24, the communication line 51 and the refrigerant line 22 sequentially and returns to the heat exchanger 14 is formed.

Refrigerant may be circulated between the heat exchanger 14 and the cooling portion 30 via the annular path without operating the compressor 12. When refrigerant cools the HV device 31, the refrigerant receives latent heat of vaporization from the HV device 31 to evaporate. Refrigerant steam vaporized by exchanging heat with the HV device 31 flows to the heat exchanger 14 via the refrigerant line 24, the communication line 51 and the refrigerant line 22 sequentially. In the heat exchanger 14, refrigerant steam is cooled to condense by running wind of the vehicle or draft from a radiator fan for cooling an engine. Refrigerant liquid liquefied in the heat exchanger 14 returns to the cooling portion 30 via the refrigerant line 23.

In this way, a heat pipe in which the HV device 31 serves as a heating portion and the heat exchanger 14 serves as a cooling portion is formed by the annular path that passes through the cooling portion 30 and the heat exchanger 14. Thus, when the vapor compression refrigeration cycle 10 is stopped, that is, when a cooler for the vehicle is stopped as well, the HV device 31 may be reliably cooled without the necessity of start-up of the compressor 12. Because the compressor 12 is not required to constantly operate in order to cool the HV device 31, the power consumption of the compressor 12 is reduced to thereby make it possible to improve the fuel economy of the vehicle and, in addition, to extend the life of the compressor 12, so it is possible to improve the reliability of the compressor 12.

FIG. 6 and FIG. 7 show a ground 60. The cooling portion 30 is arranged below the heat exchanger 14 in the vertical direction perpendicular to the ground 60. In the annular path that circulates refrigerant between the heat exchanger 14 and the cooling portion 30, the cooling portion 30 is arranged below, and the heat exchanger 14 is arranged above. The heat exchanger 14 is arranged at the level higher than the cooling portion 30.

In this case, refrigerant steam heated and vaporized in the cooling portion 30 goes up in the annular path, reaches the heat exchanger 14, is cooled in the heat exchanger 14, condenses into liquid refrigerant, goes down in the annular path by the action of gravity and returns to the cooling portion 30. That is, a thermo-siphon heat pipe is formed of the cooling portion 30, the heat exchanger 14 and the paths of refrigerant that connect them. Because the heat transfer efficiency from the HV device 31 to the heat exchanger 14 may be improved by forming the heat pipe, when the vapor compression refrigeration cycle 10 is stopped as well, the HV device 31 may be further efficiently cooled without additional power.

The selector valve 52 that switches the state of fluid communication between the communication line 51 and the refrigerant lines 24 and 22 may be the above described pair of valves 57 and 58 or may be a three-way valve that is arranged at the branching portion between the refrigerant line 24 and the communication line 51. In any cases, during both operation and stop of the vapor compression refrigeration cycle 10, the HV device 31 may be efficiently cooled. The valves 57 and 58 just need to have a simple structure so as to be able to open or close the refrigerant line, so the valves 57 and 58 are not expensive, and the two valves 57 and 58 are used to make it possible to provide the further low-cost cooling system 1. On the other hand, it is presumable that a space required to arrange the three-way valve is smaller than a space required to arrange the two valves 57 and 58; and the three-way valve is used to make it possible to provide the cooling system 1 having a further reduced size and excellent vehicle mountability.

As described above, in the cooling system 1 according to the present embodiment, refrigerant after cooling the HV device 31 in the cooling portion 30 and refrigerant after exchanging heat with air, used for the cabin, in the heat exchanger 18 exchange heat with each other in the internal heat exchanger 40. By so doing, during cooling operation, refrigerant heated by exchanging heat with the HV device 31 is cooled in the internal heat exchanger 40. Therefore, refrigerant after passing through the heat exchanger 15 may be cooled into a supercooled liquid state without increasing the capacity of the heat exchanger 15, so the size of the heat exchanger 15 may be reduced. When the amount of heat generated by the HV device 31 is small, a degree of supercooling of refrigerant increases, so the cooling performance may be improved. In this case, additionally, the power of the compressor 12 may be reduced, so power saving of the cooling system 1 may be achieved. When the amount of heat generated by the HV device 31 is large as well, the cooling system 1 is controlled such that refrigerant is reliably cooled into a supercooled liquid state, so controllability of cooling operation may be improved.

During heating operation, refrigerant absorbs heat from outside air to be heated in the heat exchangers 15 and 14. Refrigerant is additionally heated in the internal heat exchanger 40 as well, and absorbs heat from the HV device 31 to be further heated in the cooling portion 30. Because refrigerant is heated not only in the heat exchangers 15 and 14 but also in the internal heat exchanger 40 and the cooling portion 30, the refrigerant may be heated into a sufficient superheated steam state at the outlet of the heat exchanger 14, so the HV device 31 may be appropriately cooled while maintaining excellent heating performance in the cabin of the vehicle.

Therefore, refrigerant after passing through the heat exchanger 14 may be heated into a superheated steam state without increasing the capacities of the heat exchangers 15 and 14, so the size of each of the heat exchangers 14 and 15 may be reduced. Refrigerant is heated in the cooling portion 30 and heat waste from the HV device 31 may be effectively utilized to heat the cabin, so the coefficient of performance improves, and the power consumption for adiabatically compressing refrigerant in the compressor 12 during heating operation may be reduced.

### Second Embodiment

FIG. 8 is a schematic view that shows the configuration of a cooling system 1 according to a second embodiment. The cooling system 1 according to the second embodiment differs from the cooling system 1 according to the first embodiment in that the heat exchanger 14 and the heat exchanger 15 are manufactured as an integrated heat exchanger.

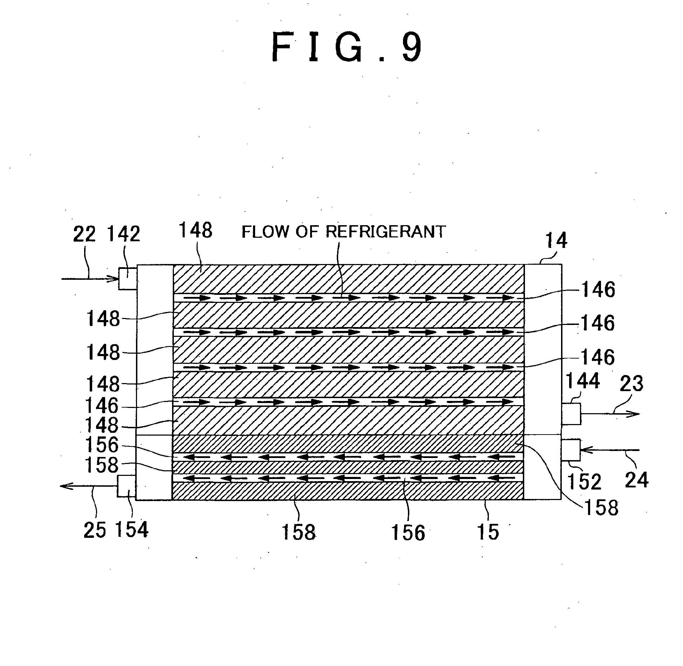

FIG. 9 is a schematic view that shows an example of the internal structure of the heat exchangers 14 and 15 according to the second embodiment. As shown in FIG. 9, the heat exchanger 14 and the heat exchanger 15 are integrally arranged. The integrally arranged heat exchanger 14 and heat exchanger 15 are, for example, provided next to an engine cooling radiator mounted on the vehicle, and carries out heat exchange between running wind of the vehicle or cooling air supplied by a cooling fan and refrigerant.

The heat exchanger 14 includes a plurality of tubes 146 through which refrigerant flows and a plurality of fins 148 that are used to exchange heat between refrigerant in the plurality of tubes 146 and air around the heat exchanger 14. The plurality of tubes 146 are arranged in parallel with one another between an inlet portion 142 and an outlet portion 144. The inlet portion 142 is connected to the refrigerant line 22, and introduces refrigerant from the compressor 12. The outlet portion 144 is connected to the refrigerant line 23 routed to the cooling portion 30. Refrigerant introduced via the inlet portion 142 flows through the plurality of tubes 146 in a distributed manner.

Each of the plurality of fins 148 are arranged next to the gap between any adjacent two of the plurality of tubes 146 between the inlet portion 142 and the outlet portion 144. Refrigerant exchanges heat with air around the heat exchanger 14 via the fin 148 to be condensed in each of the plurality of tubes 146. Refrigerant after being condensed in the heat exchanger 14 flows from the outlet portion 144 to the cooling portion 30.

The heat exchanger 15 includes a plurality of tubes 156 and fins 158. The plurality of tubes 156 flow refrigerant. The fins 158 are used to exchange heat between refrigerant in the plurality of tubes 156 and air around the heat exchanger 15. The plurality of tubes 156 are arranged in parallel with one another between an inlet portion 152 and an outlet portion 154. The inlet portion 152 is connected to the refrigerant line 24, and introduces refrigerant from the cooling portion 30. The outlet portion 154 is connected to the refrigerant line 25 routed to the expansion valve 16. Refrigerant introduced via the inlet portion 152 flows through the plurality of tubes 156 in a distributed manner.

Each of the plurality of fins 158 is arranged next to the gap between any adjacent two of the plurality of tubes 156 between the inlet portion 152 and the outlet portion 154. Refrigerant is cooled by exchanging heat with air around the heat exchanger 15 via the fin 158 in each of the plurality of tubes 156. Refrigerant after being cooled in the heat exchanger 15 flows from the outlet portion 154 to the heat exchanger 18 via the expansion valve 16.

As shown in FIG. 9, a partition and individual outlets and inlets are provided for the integrated heat exchanger to thereby make it possible to cause the integrated heat exchanger to separately serve as the two heat exchangers 14 and 15, so manufacturing cost of the heat exchangers 14 and 15 may be reduced.

The cooling system 1 according to the second embodiment further includes a check valve 54. The check valve 54 is arranged in the refrigerant line 22 between the compressor 12 and the heat exchanger 14 on the side closer to the compressor 12 than the connection portion between the refrigerant line 22 and the communication line 51. The check valve 54 allows flow of refrigerant from the compressor 12 toward the heat exchanger 14 and prohibits flow of refrigerant in the opposite direction.

By so doing, when the flow regulating valve 39 is fully closed (valve opening degree 0%) and the selector valve 52 is adjusted such that refrigerant flows from the refrigerant line 24 to the communication line 51 and does not flow to the heat exchanger 15, a closed loop path of refrigerant for circulating refrigerant between the heat exchanger 14 and the cooling portion 30 may be reliably formed.

When no check valve 54 is provided, refrigerant may flow from the communication line 51 to the refrigerant line 22 adjacent to the compressor 12. By providing the check valve 54, it is possible to reliably prohibit flow of refrigerant from the communication line 51 toward the side adjacent to the compressor 12, so it is possible to prevent a decrease in the cooling performance for cooling the HV device 31 during a stop of the vapor compression refrigeration cycle 10, using the heat pipe that forms the annular refrigerant path. Thus, when the cooler for the cabin of the vehicle is stopped as well, it is possible to efficiently cool the HV device 31.

In addition, when the amount of refrigerant in the closed loop path of refrigerant is insufficient during a stop of the vapor compression refrigeration cycle 10, the compressor 12 is operated only in a short period of time to thereby make it possible to supply refrigerant to the closed loop path via the check valve 54. By so doing, the amount of refrigerant in the closed loop may be increased to thereby increase the amount of heat exchanged in the heat pipe. Thus, the amount of refrigerant in the heat pipe may be ensured, so it is possible to avoid insufficient cooling of the HV device 31 because of an insufficient amount of refrigerant.

The cooling system 1 according to the second embodiment further includes a gas-liquid separator 70. Refrigerant flowing out from the heat exchanger 14 is separated into gas and liquid in the gas-liquid separator 70. Liquid refrigerant separated in the gas-liquid separator 70 flows via the refrigerant line 23 and is supplied to the cooling portion 30 to cool the HV device 31. The liquid refrigerant is refrigerant in a just saturated liquid state. By taking only liquid refrigerant from the gas-liquid separator 70 and flowing the liquid refrigerant to the cooling portion 30, the performance of the heat exchanger 14 may be fully utilized to cool the HV device 31, so it is possible to provide the cooling system 1 having improved cooling performance for cooling the HV device 31.

Refrigerant in a saturated liquid state at the outlet of the gas-liquid separator 70 is introduced into the cooling line 32 that cools the HV device 31 to thereby make it possible to minimize gaseous refrigerant within refrigerant that flows in the cooling system for cooling the HV device 31, including the refrigerant lines 23 and 24 and the cooling line 32. Therefore, it is possible to suppress an increase in pressure loss due to an increase in flow rate of refrigerant steam flowing in the cooling system of the HV device 31, and the power consumption of the compressor 12 for flowing refrigerant may be reduced, so it is possible to avoid deterioration of the performance of the vapor compression refrigeration cycle 10.

Refrigerant liquid in a saturated liquid state is stored inside the gas-liquid separator 70 as shown in FIG. 8. The gas-liquid separator 70 functions as a reservoir that temporarily stores refrigerant liquid inside. When refrigerant liquid in a predetermined amount is stored in the gas-liquid separator 70, the flow rate of refrigerant flowing from the gas-liquid separator 70 to the cooling portion 30 may be maintained at the time of fluctuations in load. Because the gas-liquid separator 70 has the function of storing liquid, serves as a buffer against load fluctuations and is able to absorb load fluctuations, the cooling performance for cooling the HV device 31 may be stabilized.

Note that, in the above described embodiments, the cooling system 1 that cools an electrical device mounted on the vehicle is described using the HV device 31 as an example. The electrical device is not limited to the illustrated electrical devices, such as an inverter and a motor generator. The electrical device may be any electrical device as long as it generates heat when it is operated. In the case where there are a plurality of electrical devices to be cooled, the plurality of electrical devices desirably have a common cooling target temperature range. The target temperature range for cooling is an appropriate temperature range as a temperature environment in which the electrical devices are operated.

Furthermore, the heat generating source cooled by the cooling system 1 according to the embodiments of the invention is not limited to the electrical device mounted on the vehicle; instead, it may be any device that generates heat or may be a heat generating portion of any device.

The embodiments of the invention are described above; however, the configurations of the embodiments may be combined where appropriate. In addition, the embodiments described above should be regarded as only illustrative in every respect and not restrictive. The scope of the invention is indicated not by the above description but by the appended claims, and is intended to include all modifications within the meaning and scope equivalent to the scope of the appended claims.

The cooling system according to the aspect of the invention may be particularly advantageously applied to cooling of an electrical device, such as a motor generator and an inverter, using a vapor compression refrigeration cycle for cooling and heating a cabin, in a vehicle, such as a hybrid vehicle, a fuel-cell vehicle and an electric vehicle, equipped with the electrical device.

## Claims

1. A cooling system for cooling a heat generating source, **characterized by** comprising:
a compressor (12) that circulates refrigerant;
a first heat exchanger (14) and a second heat exchanger (15) that carry out heat exchange between the refrigerant and outside air;
a decompressor (16) that decompresses the refrigerant;
a third heat exchanger (18) that carries out heat exchange between the refrigerant and air-conditioning air;
a cooling portion (30) that is provided in a path of the refrigerant flowing between the first heat exchanger (14) and the second heat exchanger (15) and that uses the refrigerant to cool the heat generating source;
a first line (24) through which the refrigerant flows between the cooling portion (30) and the second heat exchanger (15);
a second line (27) through which the refrigerant flows between the third heat exchanger (18) and the compressor (12); and
an internal heat exchanger (40) in which the refrigerant that flows through the first line (24) and the refrigerant that flows through the second line (27) exchange heat with each other.

2. The cooling system according to claim 1, wherein
the internal heat exchanger (40) is arranged between the cooling portion (30) and the second heat exchanger (15).

3. The cooling system according to claim 1 or 2, further comprising:
a third line (22) through which the refrigerant flows between the compressor (12) and the first heat exchanger (14); and
a fourth line (51) that provides fluid communication between the first line (24) and the third line (22).

4. The cooling system according to claim 3, further comprising:
a selector valve that switches a state of fluid communication between the fourth line (51), and the first line (24) and the third line (22).

5. The cooling system according to claim 4, wherein
the selector valve is configured so as to switch the state of fluid communication into a state where the refrigerant flows through the fourth line (51) during a stop of the compressor (12).

6. The cooling system according to any one of claims 3 to 5, wherein
the cooling portion (30) is arranged below the first heat exchanger (14).

7. The cooling system according to any one of claims 1 to 6, further comprising:
a four-way valve that switches between flow of the refrigerant from the compressor (12) toward the first heat exchanger (14) and flow of the refrigerant from the compressor (12) toward the third heat exchanger (18).

8. The cooling system according to any one of claims 1 to 7, wherein
the first heat exchanger (14) and the second heat exchanger (15) are integrally arranged.

## Patentansprüche

1. Kühlsystem zum Kühlen einer Wärmeerzeugungsquelle, **gekennzeichnet durch**:
einen Kompressor (12), der ein Kühlmittel zirkuliert;
einen ersten Wärmetauscher (14) und einen zweiter Wärmetauscher (15), welche einen Wärmeaustausch zwischen dem Kühlmittel und einer Außenluft ausführt;
eine Entspannungsvorrichtung (16), welche ein Kühlmittel entspannt;
einen dritten Wärmetauscher (18), welcher einen Wärmeaustausch zwischen dem Kühlmittel und einer klimatisierten Luft ausführt;
einen Kühlabschnitt (30), welcher in einem Pfad des Kühlmittels, in welchem dieses zwischen dem ersten Wärmetauscher (14) und dem zweiten Wärmetauscher (15) strömt, vorgesehen ist und welcher das Kühlmittel verwendet, um die Wärmeerzeugungsquelle zu kühlen;
eine erste Leitung (24), **durch** welche das Kühlmittel zwischen dem Kühlabschnitt (30) und dem zweiten Wärmetauscher (15) strömt;
eine zweite Leitung (27), **durch** welche das Kühlmittel zwischen dem dritten Wärmetauscher (18) und dem Kompressor (12) strömt; und
einen internen Wärmetauscher, in welchem das Kühlmittel, welches **durch** die erste Leitung (24) strömt, und das Kühlmittel, welches **durch** die zweite Leitung (27) strömt, miteinander Wärme austauschen.

2. Kühlsystem nach Anspruch 1, wobei der interne Wärmetauscher (40) zwischen dem Kühlabschnitt (30) und dem zweiten Wärmetauscher (15) angeordnet ist.

3. Kühlsystem nach Anspruch 1 oder 2, ferner mit:
einer dritten Leitung (22), durch welche das Kühlmittel zwischen dem Kompressor (12) und dem ersten Wärmetauscher (14) strömt; und
einer vierten Leitung (51), welche zwischen der ersten Leitung (24) und der dritten Leitung (22) eine Fluidverbindung bereitstellt.

4. Kühlsystem nach Anspruch 3, ferner mit einem Schaltventil, welches einen Fluidverbindungszustand zwischen der vierten Leitung (51), der ersten Leitung (24) und der dritten Leitung (22) schaltet.

5. Kühlsystem nach Anspruch 4, wobei das Schaltventil so ausgebildet ist, um den Fluidverbindungszustand in einen Zustand zu schalten, in welchem das Kühlmittel während eines Stopps des Kompressors (12) durch die vierte Leitung (51) strömt.

6. Kühlsystem nach einem der Ansprüche 3 bis 5, wobei der Kühlabschnitt (30) unterhalb des ersten Wärmetauschers (14) angeordnet ist.

7. Kühlsystem nach einem der Ansprüche 1 bis 6, ferner mit einem Vierwegeventil, welches zwischen einer Kühlmittelströmung vom Kompressor (12) in Richtung des ersten Wärmetauschers (14) und einer Kühlmittelströmung vom Kompressor (12) in Richtung des dritten Wärmetauschers (18) schaltet.

8. Kühlsystem nach einem der Ansprüche 1 bis 7, wobei der erste Wärmetauscher (14) und der zweite Wärmetauscher (15) einstückig angeordnet sind.

## Revendications

1. Système de refroidissement pour refroidir une source de génération de chaleur, **caractérisé en ce qu'**il comprend :
un compresseur (12) qui fait circuler du réfrigérant ;
un premier échangeur de chaleur (14) et un second échangeur de chaleur (15) qui réalisent l'échange de chaleur entre le réfrigérant et l'air extérieur ;
un décompresseur (16) qui décompresse le réfrigérant ;
un troisième échangeur de chaleur (18) qui réalise un échange de chaleur entre le réfrigérant et un air de climatiseur ;
une partie de refroidissement (30) qui est placée dans un chemin du réfrigérant s'écoulant entre le premier échangeur de chaleur (14) et le second échangeur de chaleur (15) et qui utilise le réfrigérant pour refroidir la source de génération de chaleur ;
une première ligne (24) à travers laquelle le réfrigérant s'écoule entre la partie de refroidissement (30) et le second échangeur de chaleur (15) ;
une seconde ligne (27) à travers laquelle le réfrigérant s'écoule entre le troisième échangeur de chaleur (18) et le compresseur (12) ; et
un échangeur de chaleur interne (40) dans lequel le réfrigérant qui s'écoule à travers la première ligne (24) et le réfrigérant qui s'écoule à travers la seconde ligne (27) échangent de la chaleur l'un avec l'autre.

2. Système de refroidissement selon la revendication 1, dans lequel
l'échangeur de chaleur interne (40) est agencé entre la partie de refroidissement (30) et le second échangeur de chaleur (15).

3. Système de refroidissement selon la revendication 1 ou 2, comprenant en outre :
une troisième ligne (22) à travers laquelle le réfrigérant s'écoule entre le compresseur (12) et le premier échangeur de chaleur (14) ; et
une quatrième ligne (51) qui permet une communication fluide entre la première ligne (24) et la troisième ligne (22).

4. Système de refroidissement selon la revendication 3, comprenant en outre :
une vanne de sélecteur qui commute un état de communication fluide entre la quatrième ligne (51), et la première ligne (24) et la troisième ligne (22).

5. Système de refroidissement selon la revendication 4, dans lequel
la vanne de sélecteur est configurée de façon à commuter l'état de communication fluide dans un état dans lequel le réfrigérant s'écoule à travers la quatrième ligne (51) pendant un arrêt du compresseur (12).

6. Système de refroidissement selon l'une quelconque des revendications 3 à 5, dans lequel
la partie de refroidissement (30) est agencée sous le premier échangeur de chaleur (14).

7. Système de refroidissement selon l'une quelconque des revendications 1 à 6, comprenant en outre :
une vanne à quatre voies qui commute entre l'écoulement du réfrigérant depuis le compresseur (12) vers le premier échangeur de chaleur (14) et l'écoulement du réfrigérant du compresseur (12) vers le troisième échangeur de chaleur (18).

8. Système de refroidissement selon l'une quelconque des revendications 1 à 7, dans lequel
le premier échangeur de chaleur (14) et le second échangeur de chaleur (15) sont agencés d'un seul bloc.
